## Europäisches Patentamt
## European Patent Office
## Office européen des brevets

(19)

(11) Veröffentlichungsnummer: **0 023 533**
**B1**

(12)

# EUROPÄISCHE PATENTSCHRIFT

(45) Veröffentlichungstag der Patentschrift:
20.10.82

(51) Int. Cl.³: **B 01 D 19/04**

(21) Anmeldenummer: 80101938.1

(22) Anmeldetag: 10.04.80

(54) Mittel zum Entschäumen flüssiger Medien.

(30) Priorität: 26.06.79 DE 2925722

(43) Veröffentlichungstag der Anmeldung:
11.02.81 Patentblatt 81/6

(45) Bekanntmachung des Hinweises auf die Patenterteilung:
20.10.82 Patentblatt 82/42

(84) Benannte Vertragsstaaten:
BE DE FR GB IT

(56) Entgegenhaltungen:
WO-A-79/00152
DE-A-1 916 360
DE-A-2 107 082
DE-A-2 454 977
DE-A-2 550 277
DE-A-2 745 583
DE-A-2 829 261
DE-A-2 829 906
US-A-4 008 173
US-A-4 021 365
INDUSTRIAL AND ENGINEERING CHEMISTRY,
FUNDAMENTALS, Band 16, Nr. 4, 1977
R.D. KULKARNI et al. "Mechanism of Antifoaming:
Role of Filler Particle"
Seiten 472 bis 474

(73) Patentinhaber: Th. Goldschmidt AG,
Goldschmidtstrasse 100, D-4300 Essen (DE)

(72) Erfinder: Fink, Hans-Ferdi, Brassertstrasse 46,
D-4300 Essen (DE)
Erfinder: Koerner, Götz, Dr., Kantorie 126, D-4300 Essen
(DE)

## Mittel zum Entschäumen flüssiger Medien

Die Erfindung betrifft ein Mittel zum Entschäumen flüssiger Medien, vorzugsweise wässriger Lösungen, welches als Wirkstoffe ein Entschäumeröl und feinteilige Kieselsäure enthält.

Es ist bekannt, Entschäumerzubereitungen aus Entschäumerölen von feinteiliger Kieselsäure herzustellen. So ist z.B. in der DE-A-24 43 853 eine Zubereitung beschrieben, welche nach ihrer Kennzeichnung aus 0,2 bis 7,5 Gew.-% hochdisperser Kieselsäure oder hochdispersen Aluminiumoxids und 95,5 bis 99,8 Gew.-% eines Methylpolysiloxan-Polyoxyalkylen-Blockmischpolymerisates, welches 10 bis 60 Gew.-% Methylpolysiloxan enthält und dessen Polyoxyalkylenblock mehr als 80 bis 100 Gew.-% Oxypropyleneinheiten aufweist, besteht.

Aus der DE-A-23 45 335 sind Zubereitungen zur Entschäumung wässriger Lösungen durch Dispersionen bekannt, die gekennzeichnet sind durch einen Gehalt an 80 bis 95 Gew.-% eines Mineralöles oder pflanzlichen oder tierischen Öles, 1 bis 7,5 Gew.-% hochdisperser Kieselsäure oder hochdispersen Aluminiumoxids, 1,0 bis 10 Gew.-% eines Methylpolysiloxan-Polyoxyalkylen-Blockmischpolymerisates, welches 10 bis 60 Gew.-% Methylpolysiloxan enthält und dessen Polyoxyalkylenblock 80 bis 100 Gew.-% Oxypropyleneinheiten aufweist, und gegebenenfalls 2 bis 10 Gew.-% nichtionogener Emulgatoren, welche im Mittel einen HLB-Wert von 8 bis 14 aufweisen, wobei die Summe der vorgenannten Bestandteile 100 Gew.-% ergeben muss.

Als wasserunlösliche Entschäumeröle werden hier Kombinationen aus Mineralölen, pflanzlichen oder tierischen Ölen und wasserunlöslichen Methylpolysiloxan-Polyoxyalkylen-Blockmischpolymerisaten verwendet.

Diese Offenlegungsschriften berücksichtigen die allgemeine Kenntnis, dass durch den Zusatz feinteiliger Kieselsäure zu einem Entschäumeröl dessen entschäumende Wirksamkeit wesentlich verbessert werden kann.

Es ist weiterhin bekannt, dass die Eigenschaften der Kieselsäure duch eine Oberflächenbehandlung wesentlich beeinflusst werden können.

Die Verbesserungen der entschäumenden Wirkung von Kieselsäure durch Hydrophobierung ist von S. Ross und G. Nishioka in J. Colloid Interface Sci., 65, 216 (1978) beschrieben worden. In dieser Veröffentlichung wird zwischen einer α- und β-Form der Zubereitung unterschieden. Die α-Form besteht in einer blossen Verteilung der Kieselsäure in Siliconöl. Erhitzt man die Zubereitung aus Kieselsäure und Siliconöl und setzt sie gleichzeitig der Einwirkung von Scherkräften aus, erfolgt eine Hydrophobierung der Oberfläche der Kieselsäure: Die Zubereitung geht hierdurch in den sogenannten β-Zustand über. Es hat sich dabei herausgestellt, dass die in ihrer β-Form vorliegenden Zubereitungen eine bessere entschäumende Wirkung aufweisen, als sie der α-Form innewohnt.

Durch die partielle Hydrophobierung der Kieselsäure können jedoch auch gegenteilige Effekte erzielt werden. So lehrt die DE-A-21 07 082, dass eine Kieselsäure einer Methanolzahl von 5 bis 35 eine optimale Ausgewogenheit zwischen guten Fliesseigenschaften und einer guten Verträglichkeit mit Schäumen, insbesondere Feuerbekämpfungsschäumen, aufweist. Hier wird die Kieselsäure zum Füllen und Stabilisieren von Schäumen verwendet.

Der vorliegenden Erfindung liegt die Aufgabe zugrunde, ein Mittel zum Entschäumen flüssiger Medien auf der Basis von Entschäumeröl und feinteiliger Kieselsäure aufzufinden, wobei die Zubereitung verschiedene Anforderungen erfüllen soll: Die Zubereitung soll in ihrer entschäumenden Wirkung den Zubereitungen des Standes der Technik überlegen sein und sie soll sich in dem zu entschäumenden Medium gut verteilen lassen, d.h. möglichst niedrige Viskosität aufweisen.

Diese Aufgabe wird erfindungsgemäss dadurch gelöst, dass das Mittel zum Entschäumen, bezogen auf Entschäumeröl, bis zu gleiche Mengen Kieselsäure enthält, die hydrophobiert ist und eine Methanolzahl von 50 bis 70, insbesondere eine Methanolzahl von 57 bis 65, aufweist.

Die Methanolzahl wird entsprechend der DE-A-21 07 082 wie folgt bestimmt:
0,2 g der zu untersuchenden Kieselsäure werden in 50 ml Wasser gegeben. Aus der Bürette wird so lange Methanol zugegeben, bis das gesamte Siliciumdioxid benetzt ist. Als Endpunkt wird der Punkt angesehen, bei dem das gesamte Pulver sich als Suspension in der Flüssigkeit befindet und weder auf der Oberfläche der Flüssigkeit Teilchen schwimmen noch Kieselsäureagglomerate zu beobachten sind.

Die Methanolzahl wird nach folgender Formel errechnet:

$$\text{Methanolzahl} = \frac{\text{ml Methanol} \cdot 100}{\text{ml Methanol} + 50}$$

Die erfindungsgemässe Lehre geht somit über die Angabe der Verwendung hydrophobierter Kieselsäure als Mittel zum Verbessern der Antischaumwirkung eines Entschäumeröles hinaus und gibt eine charakteristische, die Hydrophobie der Kieselsäure kennzeichnende Masszahl an.

Überraschenderweise wurde gefunden, dass das erfindungsgemässe Mittel zum Entschäumen einerseits eine hohe Wirksamkeit aufweist, andererseits so niedrigviskos ist, dass es leicht in dem zu entschäumenden Medium verteilt werden kann. Verwendet man eine Kieselsäure einer geringeren Methanolzahl, steigt die Viskosität der Zubereitung erheblich an. Es ist deshalb möglich, Zubereitungen mit einem hohen Gehalt an Kieselsäure herzustellen.

Erfindungsgemässe Mittel zum Entschäumen können deshalb Kieselsäure in Mengen bis zu 100 Gew.-%, bezogen auf Entschäumeröl, enthalten.

Als Entschäumeröle kommen die aus dem Stand der Technik bekannten Entschäumeröle, wie Siliconöle, wasserunlösliche Polysiloxan-Polyoxyalkylen-Blockmischpolymerisate, wasserunlösliche Polyoxyalkylenglykole und deren Äther, Mineralöle, pflanzliche oder tierische Öle, in Frage.

Als Siliconöle werden insbesondere Dimethylpolysiloxane einer Viskosität von 20 bis 100 000 mPA · s verwendet. Bei den Polysiloxan-Polyoxyalkylen-Blockmischpolymerisaten sind diejenigen Polymerisate bevorzugt, welche 10 bis 60 Gew.-% Methylpolysiloxanblöcke enthalten und die Polyoxyalkylenblöcke 80 bis 100 Gew.-% Oxypropyleneinheiten aufweisen. Die wasserunlöslichen Polyoxyalkylenglykole oder deren Äther haben vorzugsweise ein Molekulargewicht von 1500 bis 2000.

Als Kieselsäure kann gefällte oder durch Flammhydrolyse gewonnene Kieselsäure verwendet werden. Die Hydrophobierung der Kieselsäure erfolgt vorzugsweise durch Einwirkung von Silanen oder Siloxanen auf die Kieselsäure bei erhöhten Temperaturen in an sich bekannter Weise.

Es ist jedoch auch möglich, die Kieselsäure durch Behandlung mit Wachs bzw. Wachslösungen oder -dispersionen zu hydrophobieren. Eine weitere Möglichkeit zur Hydrophobierung besteht in der Behandlung mit Fluorcarbongruppen-tragenden Silanen oder Siloxanen. Die Art der Hydrophobierung ist jedoch nicht Gegenstand vorliegender Erfindung. Sowohl die Mittel zur Hydrophobierung als auch die Hydrophobierungsverfahren sind aus dem Stand der Technik bekannt und z.B. in dem Buch «Chemie und Technologie der Silicone» von W. Noll, Verlag Chemie GmbH, 2. Ausgabe 1968, S. 369, beschrieben. Es wird weiterhin auf die Offenlegungsschriften 21 07 082 und 28 29 906 verwiesen.

Der Gegenstand der Erfindung wird anhand der folgenden Beispiele näher erläutert:

Beispiel 1

a) Herstellung und Zusammensetzung erfindungsgemässer Zubereitungen

Es werden Entschäumerzubereitungen folgender Zusammensetzung hergestellt:

100 – x Gew.-% Entschäumeröl
    x Gew.-% hydrophobierte Kieselsäure

Als Entschäumeröl wird α-ω-Bis-(trimethylsiloxy)-polydimethylsiloxan mit einer kinematischen Viskosität von 1000 mm²s⁻¹ eingesetzt. Als hochdisperse hydrophobierte Kieselsäure wird ein durch Flammhydrolyse gewonnenes Produkt mit einer BET-Oberfläche von 200 m²/g, welches durch Behandlung mit Hexamethyldisilazan hydrophobiert worden war und eine Methanolzahl von 59,6 aufweist, eingesetzt.

Die Herstellung der Zubereitungen erfolgt mit einem Glasgefäss, welches einen Nutzinhalt von 1 l aufweist und mit einem Kreuzbalkenrührer ausgerüstet ist. Das Entschäumeröl wird vorgelegt. Unter Rühren mit einer Umfangsgeschwindigkeit von 2 ms⁻¹ wird die benötigte Menge der hydrophobierten Kieselsäure eingearbeitet. Der Ansatz wird insgesamt 60 Minuten bei 25°C gerührt.

In der Tabelle 1 sind die Zusammensetzungen der Zubereitungen und deren Viskositäten, gemessen mit der Platte-Kegel-Einrichtung des Haake-Rotovisko bei einem Schergefälle von 54,2 s⁻¹, aufgeführt.

Tabelle 1

| Zubereitung | Gew.-% Entschäumeröl | Gew.-% hydrophobierte Kieselsäure | Viskosität in mPa · s |
|---|---|---|---|
| 1a | 95 | 5 | 2 636 |
| 1b | 90 | 10 | 3 280 |
| 1c | 80 | 20 | 9 039 |
| 1d | 70 | 30 | 16 430 |
| 1e | 60 | 40 | 28 450 |

b) Überprüfung der entschäumenden Wirkung

In einem 2 l-Messzylinder wird durch 1000 ml einer 0,1%igen wässrigen Lösung einer Mischung von Dodecylbenzolsulfonat und Fettalkoholpolyglykoläther ein ölfreier Luftstrom geleitet, bis 1000 ml Schaum entstanden sind. Dieser Luftstrom wird mit einer konstanten Geschwindigkeit von 6 l/min über eine Glasfritte der Porosität 1 eingeleitet. Ist das Schaumvolumen von 1000 ml erreicht, wird die Luftzufuhr durch Herausnehmen der Fritte aus dem Messgefäss unterbrochen. Dann werden 50 mg der Entschäumerzubereitung zugegeben. Nach vollständiger Zerstörung des Schaumes wird erneut Luft eingeleitet und die Zeit gemessen, die zur erneuten Bildung eines Schaumvolumens von 1000 ml notwendig ist.

Um die Dosierung der Entschäumerzubereitung zu erleichtern, wurden die in Tabelle 1 beschriebenen Mischungen in 10%ige Emulsionen überführt. Hierzu wurden 10 Gewichtsteile der Zubereitung und 2,5 Gewichtsteile eines Polyäthylenglykolmonostearates mit einem Polyglykol-Anteil von ca. 60 Gew.-% und 87,5% Wasser emulgiert. Die zur Durchführung der Wirksamkeitsprüfung benötigten 50 mg der Entschäumerzubereitung sind in 0,5 ml der beschriebenen Emulsion enthalten. Diese Menge lässt sich mit Hilfe einer Mikropipette leicht in das Messgefäss einbringen.

Beispiel 2

Entsprechend Beispiel 1 werden Entschäumerzubereitungen hergestellt, welche folgende Zusammensetzung aufweisen:

100 – x Gew.-% Entschäumeröl
    x Gew.-% hydrophobierte Kieselsäure

Als Entschäumeröl wird das in Beispiel 1 beschriebene α-ω-Bis-(trimethylsiloxy)-polydimethylsiloxan verwendet.

Als hydrophobierte Kieselsäure wurde eine Fällungskieselsäure, welche mit einem α-ω-Bis-(trimethylsiloxy)-polydimethylsiloxan hydrophobiert worden war und eine BET-Oberfläche von 100 m²/g, sowie eine Methanolzahl von 65,2 besitzt, verwendet.

In der Tabelle 2 sind die Zusammensetzungen der Zubereitungen und deren Viskositäten aufgeführt.

Tabelle 2

| Zube-rei-tung | Gew.-% Entschäu-meröl | Gew.-% hydropho-bierte Kieselsäure | Viskosität in mPa · s |
|---|---|---|---|
| 2a | 95 | 5 | 2 430 |
| 2b | 90 | 10 | 3 069 |
| 2c | 85 | 15 | 6 834 |
| 2d | 80 | 20 | 8 764 |
| 2e | 75 | 25 | 12 683 |

Die Bestimmung der Antischaumwirkung erfolgte in der in Beispiel 1 beschriebenen Weise.

Beispiel 3

Entsprechend Beispiel 1 wurden Entschäumerzubereitungen hergestellt, welche folgende Zusammensetzung aufweisen:

100 – x Gew.-% Entschäumeröl
    x Gew.-% hydrophobierte Kieselsäure

Als Entschäumeröl wurde das des Beispiels 1 verwendet. Die hydrophobierte Kieselsäure ist ein durch Flammhydrolyse gewonnenes Produkt mit einer BET-Oberfläche von 200 m²/g, welche mit einem Dimethylpolysiloxan hydrophobiert worden war und eine Methanolzahl von 50,4 aufweist.

In Tabelle 3 sind die Zusammensetzungen der Zubereitungen und deren Viskositäten angegeben.

Tabelle 3

| Zube-rei-tung | Gew.-% Entschäu-meröl | Gew.-% hydropho-bierte Kieselsäure | Viskosität in mPa · s |
|---|---|---|---|
| 3a | 95 | 5 | 3 128 |
| 3b | 90 | 10 | 4 396 |
| 3c | 80 | 20 | 10 432 |
| 3d | 75 | 25 | 19 764 |

Die Messung der Antischaumwirkung erfolgt in der in Beispiel 1 beschriebenen Weise.

Beispiel 4
(Vergleichsbeispiel)

Es wurden entsprechend Beispiel 1 Entschäumerzubereitungen hergestellt, die folgende Zusammensetzung aufweisen:

100 – x Gew.-% Entschäumeröl
    x Gw.-% hydrophobierte Kieselsäure

Als Entschäumeröl wird das in Beispiel 1 genannte Öl verwendet.

Die hydrophobierte Kieselsäure wurde durch Behandlung einer Fällungskieselsäure, die eine BET-Oberfläche von 200 m²/g aufweist, mit Methyltriäthoxysilan erhalten. Sie besitzt eine gegenüber der erfindungsgemäss geforderten Methanolzahl von 50 bis 70 zu geringe Methanolzahl von 30,5.

In Tabelle 4 sind c Zusammensetzungen der nicht erfindungsgemässen Zubereitungen und deren Viskositäten aufgeführt.

Tabelle 4

| Zube-rei-tung | Gew.-% Entschäu-meröl | Gew.-% hydropho-bierte Kieselsäure | Viskosität in mPa · s |
|---|---|---|---|
| 4a | 95 | 5 | 11 376 |
| 4b | 90 | 10 | 18 834 |
| 4c | 85 | 15 | 26 294 |
| 4d | 80 | 20 | 43 740 |

Beispiel 5
(Vergleichsbeispiel)

Herstellung und Prüfung der Entschäumerzubereitung erfolgt gemäss Beispiel 1. Jedoch wurde eine nicht hydrophobierte Kieselsäure verwendet. Die Ergebnisse sind in Tabelle 5 zusammengestellt.

Tabelle 5

| Zube-rei-tung | Gew.-% Entschäu-meröl | Gew.-% Kieselsäure | Viskosität in mPa · s |
|---|---|---|---|
| 5a | 95 | 5 | 8 026 |
| 5b | 90 | 10 | 88 340 |
| 5c | 85 | 15 | 256 850 |
| 5d | 80 | 20 | 298 660 |

Die bei der Messung der Entschäumerwirkung von Zubereitungen gemäss Beispiel 1 bis 5 erhaltenen Zeiten bis zur Bildung von 1000 ml Schaumvolumen sind in Tabelle 6 zusammengestellt. Die Messwerte zeigen deutlich, dass die erfindungsgemässen Zubereitungen der Beispiele 1 bis 3 den Zubereitungen der Vegleichsbeispiele 4 und 5 stark überlegen sind. Ausserdem lehren die Tabellen 1 bis 5, dass die erfindungsgemässen Zubereitungen der Beispiele 1 bis 3 auch bei hohen Gehalten an hydrophobierter Kieselsäure niedrige Viskositäten aufweisen, wodurch die Verarbeitung dieser Zubereitungen erheblich einfacher durchzuführen ist, als bei den sehr hochviskosen Zubereitungen der Vergleichsbeispiele.

Tabelle 6
Zubereitungen 1 bis 3 erfindungsgemäss
Zubereitungen 4 und 5 nicht
erfindungsgemässer Vergleich

| Zube-reitung | Methanolzahl der Kieselsäure | Zeit bis 1000 ml Schaumvolumen in Minuten |
|---|---|---|
| 1a | 59,6 | 36 |
| 1b | 59,6 | 68 |
| 1c | 59,6 | 125 |
| 1d | 59,6 | 160 |
| 1e | 59,6 | 172 |
| 2a | 65,2 | 64 |
| 2b | 65,2 | 112 |
| 2c | 65,2 | 170 |
| 2d | 65,2 | 180 |
| 2e | 65,2 | 164 |
| 3a | 50,4 | 32 |
| 3b | 50,4 | 48 |
| 3c | 50,4 | 96 |
| 3d | 50,4 | 84 |
| 4a | 30,5 | 6 |
| 4b | 30,5 | 40 |
| 4c | 30,5 | 45 |
| 4d | 30,5 | 21 |
| 5a | 0 | 5 |
| 5b | 0 | 23 |
| 5c | 0 | 28 |
| 5d | 0 | 21 |

**Patentansprüche**

1. Mittel zum Entschäumen flüssiger Medien, vorzugsweise wässriger Lösungen, welches als Wirkstoffe ein Entschäumeröl und feinteilige Kieselsäure enthält, dadurch gekennzeichnet, dass es, bezogen auf Entschäumeröl, bis zu gleiche Mengen Kieselsäure enthält, die hydrophobiert ist und eine Methanolzahl von 50 bis 70 aufweist.

2. Mittel nach Anspruch 1, dadurch gekennzeichnet, dass die Kieselsäure eine Methanolzahl von 57 bis 65 aufweist.

**Revendications**

1. Agent d'élimination de la mousse de milieux liquides, de préférence de solutions aqueuses, contenant comme substances actives une huile antimousses et de l'acide silicique finement divisé et caractérisé par le fait qu'il contient, relativement à l'huile antimousses, jusqu'à des quantités égales d'acide silidique qui est hydrofugé et présente un indice de méthanol de 50 à 70.

2. Agent selon la revendication 1, caractérisé par le fait que l'acide silicique présente un indice de méthanol de 57 à 65.

**Claims**

1. Agent for defoaming liquid media, preferably aqueous solutions, which contains, as active ingredients, a defoaming oil and finely divided silica, characterised in that it contains up to equal amounts of silica, relative to defoaming oil, and that the silica has been rendered hydrophobic and has a methanol number of 50 to 70.

2. Agent according to Claim 1, characterised in that the silica has a methanol number of 57 to 65.